# EUROPÄISCHE PATENTANMELDUNG

(11) **EP 0 527 346 A1**
(43) Veröffentlichungstag der Anmeldung: **17.02.1993**
(21) Anmeldenummer: 92112029.1
(22) Anmeldetag: 15.07.1992
(51) Int. Cl.: B65G 1/06, B66F 9/07

(54) **Vorrichtung zur Bedienung eines Regals zur Lagerung von auf Paletten befindlichem Material**

(30) Priorität: 13.08.1991 DE 4126669
(71) Anmelder: STOPA ANLAGENBAU GmbH & Co KG, D-77855 Achern (DE)
(72) Erfinder: Stolzer, Paul, W-7590 Achern (DE)
(74) Vertreter: Lemcke, Rupert, Dipl.-Ing.

(57) **Zusammenfassung**

Es wird eine Vorrichtung zur Bedienung eines Regals zur Lagerung von Paletten angegeben, wobei die beiden unteren Regalfächer (10,11) der Vorlagerung, Auslagerung und Rücklagerung der Paletten (4) dienen, neben dem unteren Regalfach (11) auf der Regalrückseite ein Entnahmetisch (13) angeordnet ist, das untere Regalfach (11) auf der Regalvorderseite nach außerhalb des Regals (1) um einen Palettenplatz verlängert ist, auf der Regalvorderseite Kranmittel auf das Regal (1) zu und von diesem fort verfahrbar sind mit horizontalen Lastgabeln (23) zur Ein- und Auslagerung der Paletten (4), zwischen den beiden unteren Regalfächern (10,11), der Verlängerung (12) des unteren Regalfaches (11) sowie Entnahmetisch (13) ein Hubtisch (24) zur Aufnahme und Übergabe von Paletten (4) verfahrbar ist, Hubtisch (24) und Anordnung der Lastgabeln (23) insgesamt schmäler ausgebildet sind als die regalfachbildenden bzw. den Entnahmetisch (13) bzw. die Verlängerung (12) bildenden Palettenaufnahmen und bei unterhalb bzw. innerhalb der Verlängerung (12) positionierten Lastgabeln (23) der Hubtisch (24) in seine der Verlängerung zugeordnete Position verfahrbar ist.

## Beschreibung

Die Erfindung betrifft eine Vorrichtung zur Bedienung eines mit übereinanderliegenden Fächern ausgebildeten Regals zur Lagerung von auf Paletten befindlichem Material, insbesondere Blechpaketen.

Bei derartigen bekannten Vorrichtungen sind zwei untereinander angeordnete Regalfächer als zur Vorder- und Rückseite hin offene Fächer zur Vorlagerung, Auslagerung und Rücklagerung der Paletten ausgebildet. Auf der Regalvorderseite ist an einem Krangestell eine horizontal und parallel zum Regal angeordnete Lasttraverse über endständige Schlitten entlang vertikaler Führungsbahnen heb- und senkbar, die am Krangestell horizontal auf das Regal zu bzw. von diesem fort verfahrbar sind, wobei die Lasttraverse auf der dem Regal zugewandten Seite horizontale Lastgabeln zur Ein- und Auslagerung der Paletten bezüglich der genannten Regalfächer sowie zur Vertikalbewegung der Paletten vor der Vorderseite des Regals trägt.

Auf diese Weise können die beiden übereinander angeordneten Regalfächer, die der Vorlagerung, Auslagerung und Rücklagerung der Paletten dienen, entsprechend durch die Kranmittel bedient werden.

Andererseits befindet sich auf der Regalrückseite mit Abstand ein Entnahmetisch, auf den die Paletten bezüglich der beiden genannten Fächer zur Vorlagerung, Auslagerung und Rücklagerung überbracht werden müssen. Hierzu dient ein kettengetriebenes Fahrwerk, das aus dem oberen Fach herausführt, und zwischen dem und dem Entnahmetisch sowie dem unteren Fach ein Hubtisch verfahrbar ist.

Nachteilig bei der bekannten Vorrichtung ist jedoch der Umstand, daß bei verhältnismäßiger Kompliziertheit immer nur eine Palette gehandhabt werden kann, wobei dann die anderen Betriebsteile in Form der Kranmittel , kettengetriebenem Fahrwerk bzw. Hubtisch untätig und unter Zeitverlust warten müssen.

Aufgabe der Erfindung ist es daher, eine Vorrichtung der in Rede stehenden Art als Schnellwechselstation zu gestalten derart, daß der Wechselvorgang zwischen einer neu hinzuzuziehenden Palette und einer ausgebrauchten und in das Regal zurücklagernden Palette unter ineinander greifender Bewegung der Fördermittel und damit in schneller Weise geschehen kann, wobei hierzu praktisch mit den üblicherweise vorhandenen Betriebsmitteln, das heißt also mit einfachstem Aufwand ausgekommen werden soll.

Diese Aufgabe ist erfindungsgemäß gelöst durch eine Vorrichtung zur Bedienung eines mit übereinanderliegenden Fächern ausgebildeten Regals zur Lagerung von auf Paletten befindlichem Material, insbesondere Blechpaketen,
wobei die beiden unteren Regalfächer als zur Vorder- und Rückseite hin offene Fächer zur Vorlagerung, Auslagerung und Rücklagerung der Paletten ausgebildet sind,
neben dem unteren Regalfach auf der Regalrückseite ein Entnahmetisch angeordnet ist,
das untere Regalfach auf der Regalvorderseite nach außerhalb des Regals um einen Palettenplatz verlängert ist,
auf der Regalvorderseite an einem Krangestell eine horizontal und parallel zum Regal angeordnete Lasttraverse über endständige Schlitten entlang vertikaler Führungsbahnen heb- und senkbar ist,
die Führungsbahnen am Krangestell horizontal auf das Regal zu bzw. von diesem fort verfahrbar sind unter Freilassung der außerhalb des Regals gelegenen Verlängerung des unteren Regalfaches,
die Lasttraverse auf der dem Regal zugewandten Seite horizontale Lastgabeln zur Ein- und Auslagerung der Paletten bezüglich der Regalfächer sowie zur Vertikalbewegung der Paletten vor der Vorderseite des Regals trägt,
zwischen unterem Regalfach, dessen Verlängerung sowie Entnahmetisch ein Hubtisch zur Aufnahme und Übergabe von Paletten zwischen dem oberen der beiden unteren Regalfächer, der Verlängerung sowie Entnahmetisch verfahrbar ist,
der Hubtisch und die Anordnung der Lastgabeln in Richtung parallel zur Regalvorderseite insgesamt schmäler ausgebildet sind als die fachbildenden bzw. den Entnahmetisch bildenden Aufnahmen für die Paletten und
bei unterhalb bzw. innerhalb der Verlängerung positionierten Lastgabeln der Hubtisch in seine der Verlängerung zugeordnete Position fahrbar ist.

Diese erfindungsgemäßen Maßnahmen beinhalten zunächst einmal grundsätzlich, daß die durch die beiden unteren Regalfächer gebildeten Vor- bzw. Rücklagerplätze sowohl in der Höhe als auch in der Tiefe (quer zur Vorderseite des Regals) um das Maß einer Palette bzw. einer Palettengröße versetzt angeordnet sind. Dadurch können die beiden dem Umschlag der Paletten dienenden Regalfächer gleichzeitig bzw. getrennt voneinander durch die Lastgabeln einerseits und dem Hubtisch andererseits bedient werden. Hierzu ist nichts anderes erforderlich, als daß das untere Regalfach in Richtung auf die Kranmitte um eine Palettengröße nach außerhalb des Regals verlängert wird so, daß durch die Kranmittel einerseits und den Hubtisch andererseites befahrbar bleibt, und daß der Hubtisch nunmehr ausgehend von dem Entnahmetisch unterhalb des Regals hindurch bis zu der Verlängerung des unteren Regalfaches fahren kann.

Andererseits sind die Kranmittel im wesentlichen in Form der Lastgabeln sowie der Hubtisch in Verbindung mit der Gestaltung des Regals so ausgebildet, daß sie sich gegenseitig durchfahren können, was insbesondere für die Verlängerung des unteren Regalfaches gilt der Gestalt, daß bei unterhalb dieser Verlängerung abgesenkten Lastgabeln die Verländerung durch den Hubtisch befahrbar bleibt, so daß dort die Lastgabeln quasi in Warteposition sein können für eine Palette, die der Hubtisch mit einer Rücklagerbewegung auf der Verlängerung absetzt oder die er zum Auslagern von der Verlängerung abholt.

Andererseits sind, um dies noch einmal zu betonen bzw. zu wiederholen durch den Hubtisch die unteren Regalfächer, die Verlängerung und auch der Entnahmetisch in Vertikalrichtung sowie in Längsfahrrichtung des Hubtisches zwischen Entnahmetisch und Verlängerung durchfahrbar. Gleichermaßen gilt dies für die Lastgabeln insbesondere im Hinblick auf die Verlängerung, im übrigen aber selbstverständlich für sämtliche Regalfächer.

Als zweckmäßig hat es sich erwiesen, daß das Krangestell parallel zur Regalvorderseite aus dem Bereich des Regals verfahrbar ist und daß sich an das erstgenannte Regal gegebenenfalls auf beiden Seiten in Fahrtrichtung des Krangestells wenigstens ein weiteres Regal anschließt. Auf diese Weise lassen sich größere Regalanordnungen erstellen, die auf der Grundlage des zuerst genannten Regals über die Kranmittel in der bereits beschriebenen Weise bedienbar sind.

Die Kranmittel bedürfen einer Gestaltung, die bezüglich der Verlängerung des unteren Regalfaches kollisionsfrei ist. Dazu ist es zweckmäßig, daß das Krangestell in einer Poisition oberhalb des Regals zwei auf des Regal zu gerichtete und entlang der Regalvorderseite fahrbar abgestützte, je auf einer Seite außerhalb der Palettenbreite angeordnete obere Fahrbalken aufweist, daß das Krangestell in einer Position oberhalb der Verlängerung des unteren Regalfaches zwei weitere auf das Regal zu gerichtete, je auf einer Seite außerhalb der Palettenbreite angeordnete untere Fahrbalken aufweist, daß die unteren Fahrbalken sich bis kurz vor die Vorderseite des Regals erstrecken und dort mit ihren Enden über Vertikalstreben mit den oberen Fahrbalken rahmenbildend verbunden sind, und daß die vertikalen Führungsbahnen entlang der oberen und unteren Fahrbalken zur Entnahme bzw. Eingabe der Paletten bezüglich der Regalfächer verfahrbar sind.

Durch diese Gestaltung liegen also insbesondere die unteren Fahrbalken für die vertikalen Führungsbahnen oberhalb der Verlängerung des unteren Regalfaches, so daß hier keine Kollisionen auftreten können. Andererseits lassen sich die Führungsschlitten für die Verfahrbarkeit der Lasttraverse mit den daran angebrachten Lastgabeln derart in Vertikalrichtung verlängert ausbilden, daß trotz der höher gelegten Position der unteren Fahrbalken die Lastgabeln über die vertikalen Führungsbahnen in eine Position unterhalb der Verlängerung des unteren Regalfaches bringbar sind.

Schließlich hat es sich als zweckmäßig erwiesen, den Hubtisch als Scherenhubtisch auszubilden, da sich auf diese Weise eine besonders einfache und betriebssichere Gestaltung erreichen läßt und zum anderen die Verfahrbarkeit des Hubtisches in den Bereich der Verlängerung des unteren Regalfaches bei unterhalb dieser Verlängerung stehenden Lastgabeln leicht erreichbar ist.

Weitere Merkmale und Einzelheiten der Erfindung ergeben sich aus der nachfolgenden Beschreibung einer Ausführungsform, die auch zur Erläuterung der Arbeitsweise auf der beigefügten Zeichnung vereinfacht dargestellt ist. In der Zeichnung zeigen:
- Fig. 1: die erfindungsgemäße Vorrichtung in seitlicher Schnittansicht gemäß Schnittlinie I-I in Fig. 2;
- Fig. 2: eine Ansicht der Vorrichtung gemäß Fig. 1 von der rechten Seite der Fig. 1 aus gesehen und
- Fig. 3 bis 10: verschiedene Ansichten gemäß den Fig. 1 und 2 zur Darstellung des Arbeitszyklus der Vorrichtung.

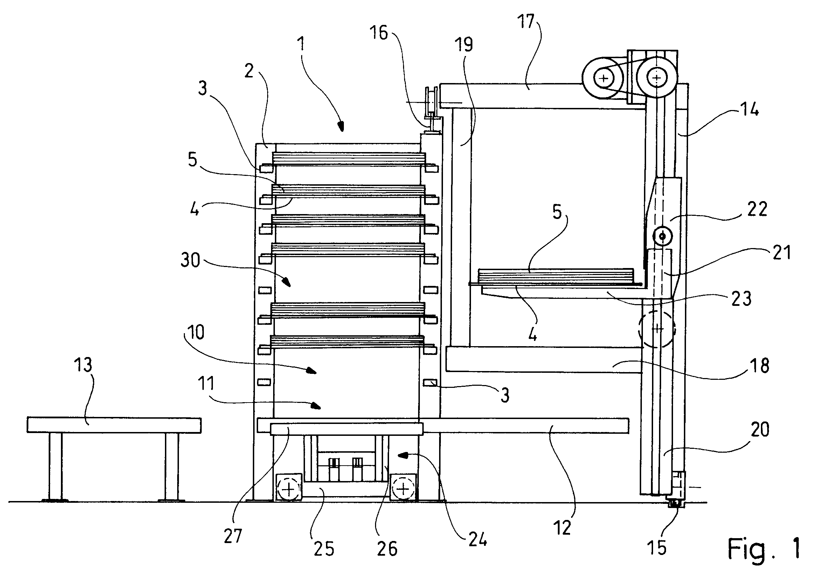

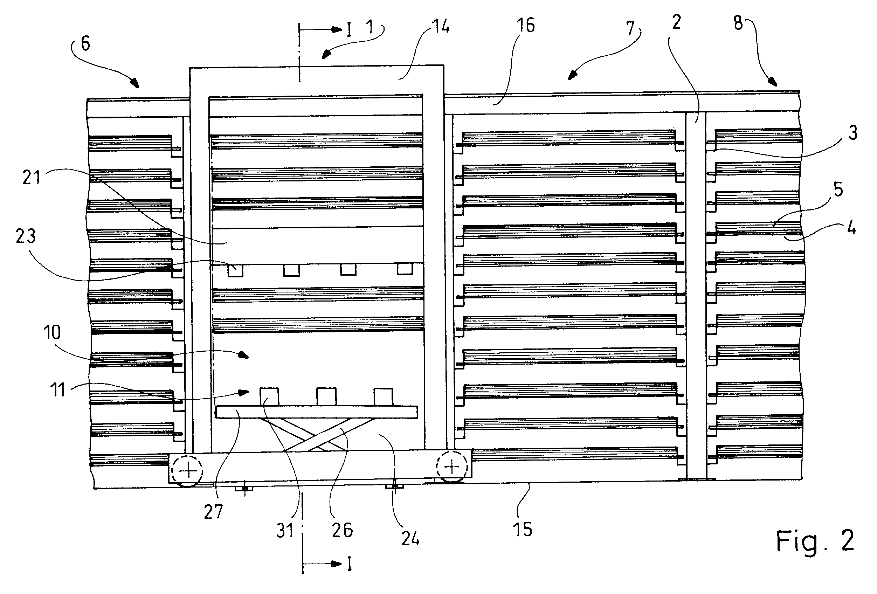

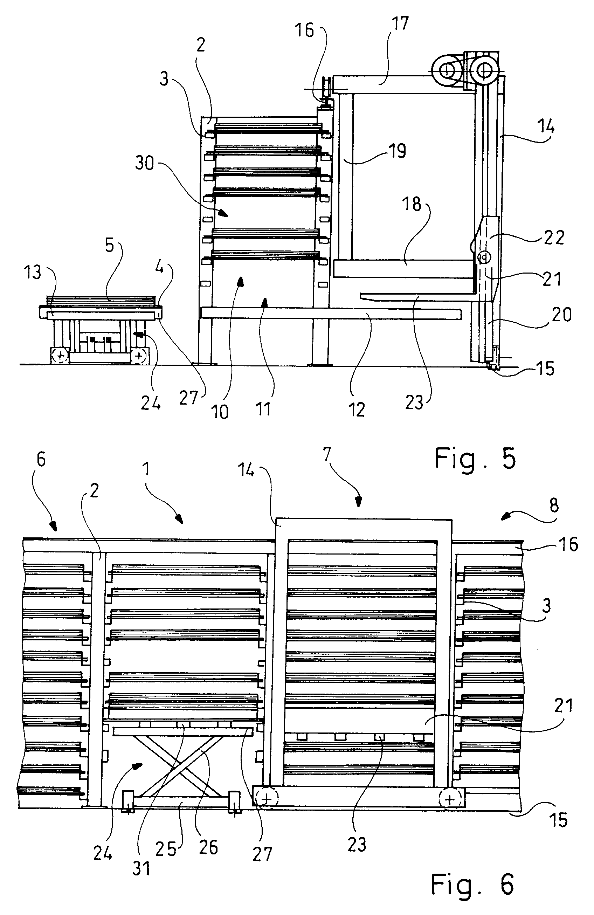

Die Fig. 1 und 2 zeigen ein erstes Lagerregal 1 (siehe auch Fig. 6), das im wesentlichen aus vier Stützen 2 besteht, an denen Auflagemittel 3 zur Bildung von Regalfächern befestigt sind, in die Paletten 4 mit darauf angeordnetem Material, im vorliegenden Falle Blechpaketen 5 sitzen.

Wie aus Fig. 2 ersichtlich, können sich an das erste Lagerregal 1 seitlich weitere Lagerregale 6, 7, 8 anschließen.

Das Lagerregal 1 weist zwei untere Regalfächer 10, 11 auf, wobei deren unteres Fach 11 zur Vorderseite des Regals 1 mit einer Verlängerung 12 der Auflagemittel für die Paletten 4 zur Bildung eines weiteren Palettenplatzes versehen ist. Im praktischen gestalten sich die Auflagemittel und die Verlängerung 12 des unteren Regalfaches 11 durch Auflageleisten, die entsprechend der Breite der Paletten senkrecht zu Fig. 1 gesehen nebeneinander angeordnet sind.

Auf der Rückseite des Regals 1, das ist in Fig. 1 die linke Seite, ist in der Höhe des unteren Regalfaches 11 mit etwas Abstand gegenüber dem Regal 1 ein Entnahmetisch 13 angeordnet, dessen horizontale, senkrecht zur Darstellung gemäß Fig. 1 nebeneinander angeordnete Auflageleisten für die Paletten mit den Auflageleisten des Faches 11 bzw. der Verlängerung 12 fluchten.

Auf der Vorderseite des Regals 1 ist ein Krangestell 14 am Boden über Rollen 15 senkrecht zur Darstellung gemäß Fig. 1 verfahrbar. An das Krangestell 14 schließen sich oben bzw. oberhalb des Regals 1 zwei auf das Regal zu gerichtete und entlang der Regalvorderseite über eine Schiene 16 verfahrbar abgestützte, je auf einer Seite außerhalb der Palettenbreite angeordnete obere Fahrbalken 17 ab. Weiter unten, aber oberhalb der Verlängerung 12 befinden sich in gleicher Anordnung Fahrbalken 18, die sich bis kurz vor die Vorderseite des Regals 1 erstrecken und dort mit ihren Enden über Vertikal streben 19 mit den oberen Fahrbalken 17 rahmenbildend verbunden sind.

An den Fahrbalken 17, 18 sind senkrecht zur Darstellung in Fig. 1 beiden Palettenseiten zugeordnete Führungsbahnen 20 in Richtung auf das Regal 1 zu und von diesem fort verfahrbar, die zwischen sich eine Lasttraverse 21 aufnehmen, die an den Führungsbahnen über Schlitten 22 vertikal verfahrbar ist und an ihrer Unterseite dem Regal 1 zugewandt sich horizontal erstreckende Lastgabeln 23 trägt.

Die Führungsbahnen 20 sind senkrecht zur Darstellung gemäß Fig. 1 mit einem solchen Abstand versehen, daß sie beidseits die Verlängerung 12 durchfahren können, so daß die Lastgabeln 23 auch in eine Position unterhalb der Verlängerung 12 gefahren werden können, wobei die Verteilung der Lastgabeln 23 entlang der Lasttraverse 21, wie aus Fig. 2 ersichtlich, so vorgenommen worden ist, daß die Lastgabeln zwischen den beiden Schenkeln der Verlängerung 12 in Vertikalrichtung durchtreten können.

Fig. 2 zeigt das Krangestell 14, wobei die größtenteils in gestrichelter Form vorzunehmende Darstellung der aus Fig. 1 ersichtlichen Führungsbahnen 20 und Schlitten 22 zugunsten der Übersichtlichkeit fortgelassen ist.

Über den Bereich von Entnahmetisch 13, unterem Regalfach 11 und Verlängerung 12 ist ein Scherenhubtisch 24 mit einem Fahrgestell 25, Hubscheren 26 und einer Tragplatte 27 verfahrbar, wobei die senkrecht zu Fig. 1 gemessene Breite der Tragplatte 27 kleiner ist als der Abstand der den Entnahmetisch 13, das Fach 11 und die Verlängerung 12 bildenden horizontalen Leisten, so daß die Tragplatte 27 in Vertikalrichtung durch Entnahmetisch 13, das Fach 11 und die Verlängerung 12 gehoben bzw. zwischen diesen bezogen auf Fig. 1 horizontal verfahren werden kann. Das gleiche trifft zu bezüglich des Faches 10 und der dortigen Auflagemittel 3. Die Tragplatte 27 weist außerdem sich senkrecht zur Darstellung in Fig. 2 erstreckende Stege 31 auf, die ein Unterfahren der Lastgabeln 23 durch die Tragplatte bei gleichzeitig oberhalb der Lastgabeln auf den Stegen 31 sitzender Palette erlauben. Die Stege sind der Einfachheit halber in den Fig. 1, 3 bis 5 und 7 bis 9 nicht gezeichnet. Sie sitzen in den zwischen den Lastgabeln 23 bleibenden Lücken.

Der Vollständigkeit halber sei an dieser Stelle erwähnt, daß der Entnahmetisch 13 nicht nur der Fortnahme von Material bzw. Blechtafeln von den Paletten 4 sondern auch dem Wiederauffüllen der Paletten dienen kann. Gleichermaßen können bezogen auf Fig. 1 links neben dem Entnahmetisch 13 weitere gleichartige Tische angeordnet sein.

Die Arbeitsweise der so ausgebildeten Vorrichtung gestaltet sich wie folgt, wobei insgesamt auf die Fig. 1 bis 10 zurückgegriffen wird:

Die Fig. 1 und 2 zeigen zu Beginn des Arbeitszyklus den Hubtisch 24 am Regalfach 11 in Warteposition. Gleichzeitig ist dargestellt, wie mit Hilfe der Kranmittel, insbesondere Lastgabeln 23 eine Palette 4 mit Material 5, beispielsweise Blechtafeln aus dem Regalfach 30 bezogen auf Fig. 1 von links nach rechts in Richtung auf die Vorderseite des Regals 1 herausgeholt worden ist.

Die Palette wird nunmehr auf die Höhe des Regalfaches 10, das in diesem Falle einen Vorlagerplatz darstellt, abgesenkt, wobei die Palette zusammen mit den Lastgabeln zwischen den Fahrbalken 18 sich hindurchbewegen können.

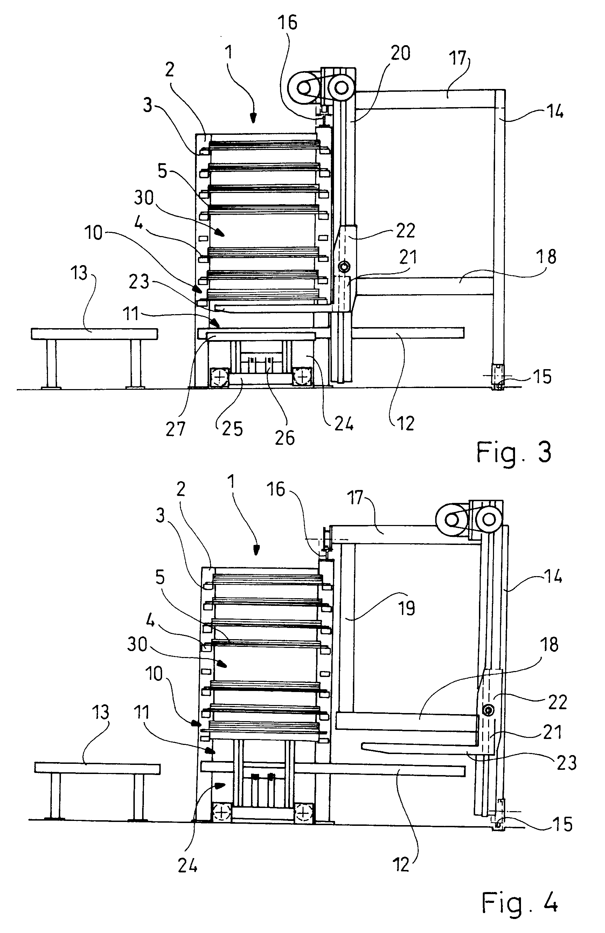

Wie aus Fig. 3 ersichtlich, ist dann die Palette 4 in das Fach 10 eingesetzt dadurch, daß die Führungsbahnen 20 entlang der Fahrbalken 17, 18 auf das Regal 1 zu gefahren sind. Nunmehr werden die Lastgabeln 23 etwas abgesenkt und es können die Lastgabeln wieder in den Bereich - bezogen auf die Zeichnung - rechts vor dem Regal 1 ausgefahren werden.

Nunmehr kann der Hubtisch 24 mit seiner Tragplatte 27 nach oben fahren und die im Fach 10 befindliche Palette 4 etwas anheben, wie dies aus Fig. 4 ersichtlich ist. Im Anschluß daran kann der Hubtisch 24 zum Entnahmetisch 13 fahren und dort die Palette 4 absetzen, wie dies aus Fig. 5 ersichtlich ist.

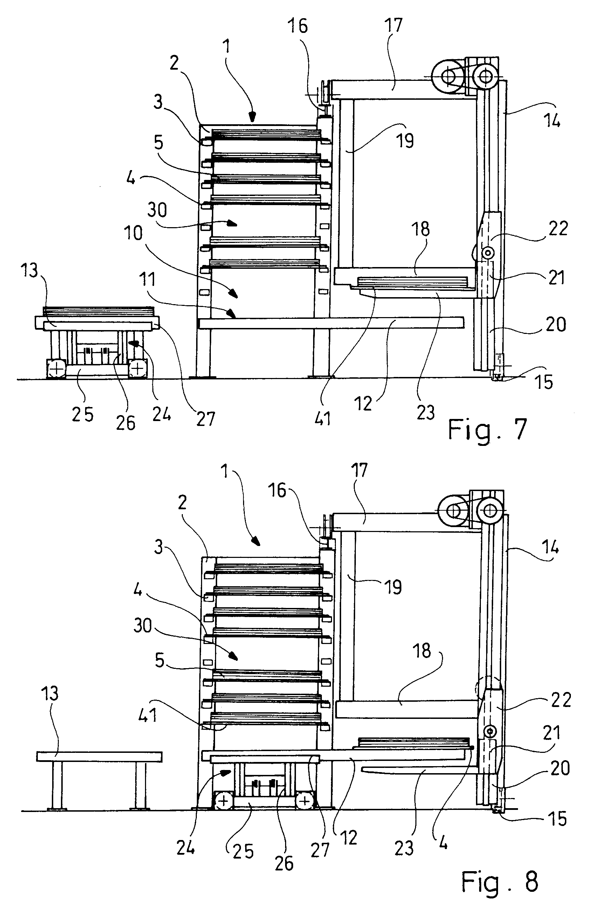

Während dem können die Kranmittel zusammen mit den Lastgabeln eine weitere Palette 4.1 entweder aus dem Regal 1 oder einem benachbarten Regal holen, wie dies die Fig. 6 und 7 veranschaulichen. Diese Palette 4.1 wird dann, wie aus den Fig. 7 und 8 ersichtlich, in das Fach 10 eingesetzt ebenso, wie dies mit der vorhergehenden Palette 4 bereits anhand der Fig. 1 und 3 gezeigt wurde.

Danach werden die Lastgabeln 23, wie dies Fig. 8 zeigt, in eine Position unterhalb der Verlängerung 12 gefahren, wobei anschließend durch den Hubtisch 24 die zuerst gemäß Fig. 4 und 5 auf den Entnahmetisch 13 gebrachte Palette 4 gemäß Fig. 7 wieder etwas vom Entnahmetisch 13 angehoben und auf die Verlängerung 12 gebracht wurde. Selbstverständlich kann die Position der Palette auf der Verlängerung 12 gemäß Fig. 8 erst dann endgültig angefahren werden, wenn vorher die Lastgabeln 23 nach Absetzen der nächstfolgenden Palette in dem Fach 10 ihre Position unterhalb der Verlängerung 12 eingenommen haben.

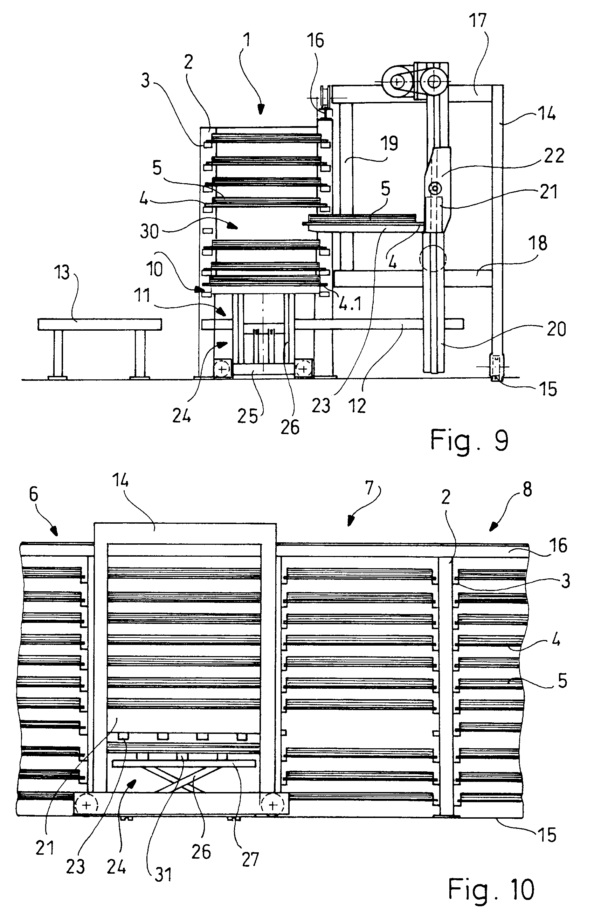

Nunmehr kehrt gemäß Fig. 9 der Hubtisch 24 in die Position unterhalb des Faches 10 zurück, um dort in der bereits anhand der Fig. 4 beschriebenen Weise die nächstfolgende Palette 4.1 zur Beförderung auf den Entnahmetisch aufzunehmen. Gleichzeitig können aber nun die Lastgabeln 23 die als erstes verarbeitete Palette 4 wieder von der Verlängerung 12 aufnehmen und in deren ursprüngliches Regalfach 30 zurückbefördern.

Bei der insbesondere anhand der Fig. 8 geschilderten Situation ist der Arbeitsablauf so gewesen, daß die Lastgabeln 23 zuerst in eine Position unterhalb der Verlängerung 12 gebracht wurden und danach der Hubtisch 24 die gemäß Fig. 7 noch auf dem Entnahmetisch 13 positionierte Palette 4 auf die Verlängerung 12 gebracht hat. Das bedeutet, daß der Hubtisch mit seiner Tragplatte 27 unterhalb der Lastgabeln 23 bei deren aus Fig. 8 ersichtlicher Position vorbeigefahren ist, um dann in die endgültige aus Fig. 8 ersichtliche Position am Fuße des Regals 1 zurückzukehren. Dies zu ermöglichen dienen die bereits erwähnten Stege 31.

Fig. 10 zeigt noch einmal in zusammengefaßter Form die Situation aus den Fig. 7 bis 9, wobei die Kranmittel aus dem Regal 7 die gemäß Fig. 7 auf den Lastgabeln befindliche Palette geholt haben. Dazu dient die gegenüber dem Regal 1 vorhandene seitliche Verfahrbarkeit der Kranmittel, die die Bedienung nicht nur des Regales 1 sondern auch von daneben angeordneten Regalen in gleicher Weise erlaubt.

Vorstehend wurde ein bestimmter Arbeitszyklus beschrieben, bei dem das Regalfach 10 praktisch ein Vorlagerfach ist, während die Verlängerung 12 ein Rücklagerfach für an dem Entnahmetisch bearbeitete Paletten darstellt.

Dieser Arbeitsvorgang ist jedoch selbstverständlich auch in umgekehrter Weise durchzuführen. Es ist ohne weiteres möglich, die Verlängerung 12 als Vorlagerfach zu benutzen und das Regalfach 10 als Rücklagerfach. In diesem Falle würden die Lastgabeln 23 eine nächst zu behandelnde Palette 4.1 nach deren Entnahme aus einem der Regale auf der Verlängerung 12 absetzen und der Hubtisch würde die vorher in Arbeit gewesene Palette 4 im Regalfach 10 rücklagern. Danach würde der Hubtisch zur Verlängerung 12 fahren und dabei die nächst zu behandelnde Palette 4.1 abholen, wobei die Lastgabeln 23 in einer Position unterhalb der Verlängerung 12 verharren würden. Hat dann der Hubtisch die nächst zu bearbeitende Palette 4.1 abgeholt, können die Lastgabeln angehoben und zum Fach 10 gebracht werden, um dort die zuvor behandelte Palette 4 abzuholen und an ihren Platz im zuständigen Regal zu bringen.

Die beschriebene Vorrichtung läßt es zu, eine behandelte Palette in den Regalbereich zurückzubringen und gleichzeitig eine nächst zu behandelnde Palette auf den vorgesehenen Vorlagerplatz zu transportieren, woraufhin dann Hubtisch und Lastgabeln in ineinandergreifender Weise zum Palettenwechsel tätig sein können, wodurch gegeseitige Wartezeiten und Umwege vermieden sind. Dies ist im wesentlichen erreicht dadurch, daß die Lagerplätze bzw. Arbeitsplätze 10, 12 für die Paletten gegeneinander sowohl in der Höhe als auch gegenüber dem Grundriß des Regals 1 versetzt angeordnet sind und daß sich Hubtisch und Lastgabeln in der beschriebenen Weise im Bereich der Verlängerung 12 durchgreifen können, so daß ein umlaufendes Lastspiel möglich ist.

Die beschriebene Vorrichtung ist gegenüber bekannten Vorrichtungen vergleichbarer Art äußerst einfach. Neben den ohnehin regelmäßig verwendeten Kranmitteln sowie einem Hubtisch sind lediglich die die Verlängerung 12 bildenden Maßnahmen als Ergänzung zum Regalfach 11 erforderlich, die aber keinen nennenswerten Aufwand darstellen.

Durch die besondere Gestaltung des Krangestells zusammen mit den Fahrbalken 17 und 18 ist es außerdem möglich, die erfindungsgemäße Vorrichtung nicht nur für ein Regal sondern auch eine beliebige Zahl daneben angeordneter Regale zu nutzen.

## Patentansprüche

1. Vorrichtung zur Bedienung eines mit übereinanderliegenden Fächern (10, 11, 30) ausgebildeten Regals (1, 6, 7, 8) zur Lagerung von auf Paletten (4) befindlichem Material (5), insbesondere Blechpaketen,
- wobei die beiden unteren Regalfächer (10, 11) als zur Vorder- und Rückseite hin offene Fächer zur Vorlagerung, Auslagerung und Rücklagerung der Paletten (4) ausgebildet sind,
- neben dem unteren Regalfach (11) auf der Regalrückseite ein Entnahmetisch (13) angeordnet ist,
- das untere Regalfach (11) auf der Regalvorderseite nach außerhalb des Regals um einen Palettenplatz (12) verlängert ist,
- auf der Regalvorderseite an einem Krangestell (14) eine horizontal und parallel zum Regal angeordnete Lasttraverse (21) über endständige Schlitten (22) entlang vertikaler Führungsbahnen (20) heb- und senkbar ist,
- die Führungsbahnen (20) am Krangestell (14) horizontal auf das Regal (1, 6, 7, 8) zu bzw. von diesem fort verfahrbar sind unter Freilassung der außerhalb des Regals (1) gelegenen Verlängerung (12) des unteren Regalfaches (11),
- die Lasttraverse (21) auf der dem Regal (1) zugewandten Seite horizontale Lastgabeln (23) zur Ein- und Auslagerung der Paletten (4) bezüglich der Regalfächer sowie zur Vertikalbewegung der Paletten vor der Vorderseite des Regals trägt,
- zwischen unterem Regalfach (11), dessen Verlängerung (12) sowie Entnahmetisch (13) ein Hubtisch (24) zur Aufnahme und Übergabe von Paletten (4) zwischen dem oberen (10) der beiden unteren Regalfächer (10, 11), der Verlängerung (12) sowie Entnahmetisch (13) verfahrbar ist,
- der Hubtisch (24) und die Anordnung der Lastgabeln (23) in Richtung parallel zur Regalvorderseite insgesamt schmäler ausgebildet sind als die fachbildenden (3) bzw. den Entnahmetisch (13) bzw. die Verlängerung (12) bildenden Aufnahmen für die Paletten und
- bei unterhalb bzw. innerhalb der Verlängerung (12) positionierten Lastgabeln (23) der Hubtisch (24) in seine der Verlängerung (12) zugeordnete Position verfahrbar ist.

2. Vorrichtung nach Anspruch 1,
dadurch gekennzeichnet,
daß das Krangestell (14) parallel zur Regalvorderseite aus dem Bereich des Regals (1) verfahrbar ist, und daß sich an das erstgenannte Regal (1) gegebenenfalls auf beiden Seiten in Fahrtrichtung des Krangestells (14) wenigstens ein weiteres Regal (6, 7, 8) anschließt.

3. Vorrichtung nach Anspruch 1 oder 2,
dadurch gekennzeichnet,
daß das Krangestell (14) in einer Position oberhalb des Regals (1, 6, 7, 8) zwei auf das Regal zu gerichtete und entlang der Regalvorderseite fahrbar abgestützte, je auf einer Seite außerhalb der Palettenbreite angeordnete obere Fahrbalken (17) aufweist, daß das Krangestell (14) in einer Position oberhalb der Verlängerung (12) des unteren Regalfaches (11) zwei weitere auf das Regal (1, 6, 7, 8) zu gerichtete, je auf einer Seite außerhalb der Palettenbreite angeordnete untere Fahrbalken (18) aufweist, daß die unteren Fahrbalken (18) sich bis kurz vor die Vorderseite des Regals (1, 6, 7, 8) erstrecken und dort mit Ihren Enden über Vertikalstreben (19) mit den oberen Fahrbalken (17) rahmenbildend verbunden sind, und daß die vertikalen Führungsbahnen (20) entlang der oberen und unteren Fahrbalken (17, 18) zur Entnahme bzw. Eingabe der Paletten bezüglich der Regalfächer verfahrbar sind.

4. Vorrichtung nach Anspruch 1,
dadurch gekennzeichnet,
daß der Hubtisch (24) als Scherenhubtisch ausgebildet ist.

5. Vorrichtung nach Anspruch 1,
dadurch gekennzeichnet,
daß der Hubtisch (24) mit zu den Lastgabeln (23) parallelen Stegen (31) auf seiner Tragpalette (27) versehen ist, daß die Stege (31) den Lücken zwischen den Lastgabeln (23) zugeordnet sind und daß die vertikale Erstreckung der Stege (31) größer als die der Lastgabeln ist.
